# FASCICULE DE BREVET EUROPEEN

(11) **EP 2 860 522 B1**
(45) Date de publication et mention de la délivrance du brevet: **31.10.2018**
(21) Numéro de dépôt: 14187760.5
(22) Date de dépôt: 06.10.2014
(51) Int. Cl.: G01N 29/26, G01N 29/265

(54) **Sonde à ultrasons pour l'examen d'un objet par profilométrie et procédé d'examen correspondant**
Ultraschallsonde zur Untersuchung eines Gegenstands mittels Profilometrie und entsprechendes Untersuchungsverfahren
Ultrasonic probe for examining an object by profilometry and corresponding examination method

(30) Priorité: 09.10.2013 FR 1359807
(43) Date de publication de la demande: 15.04.2015
(73) Titulaire: FRAMATOME, 92400 Courbevoie (FR)
(72) Inventeur: Taglione, Matthieu, 21000 DIJON (FR); Caulier, Yannick, 71100 CHALON SUR SAONE (FR)
(74) Mandataire: Lavoix

(56) Documents cités:
- WO-A2-2005/050617
- FR-A1- 2 930 642
- US-A1- 2013 047 729

## Description

La présente invention concerne une sonde à ultrasons à multiples éléments émetteurs d'ultrasons, pour l'examen d'un objet par ultrasons.

Une telle sonde à ultrasons permet d'effectuer des examens non destructifs d'un objet. Une telle sonde à ultrasons est utilisable pour examiner les surfaces et parois d'un réacteur nucléaire, notamment pour examiner des soudures de ces parois (parois d'un générateur de vapeur ou d'autres composants, comme les soudures en J par exemple).

Une sonde à ultrasons à multiples éléments émetteurs d'ultrasons permet d'émettre un faisceau ultrasonore focalisé dans l'objet examiné. Le faisceau ultrasonore correspond à la somme des signaux ultrasonores élémentaires émis par les éléments émetteurs d'ultrasons. La focalisation du faisceau est obtenue en commandant les éléments émetteurs d'ultrasons à l'aide de lois de retards pour focaliser l'énergie ultrasonore en différents points d'intérêt de l'objet examiné par synchronisation spatio-temporelle. Les lois de retards permettent d'émettre les signaux ultrasonores élémentaires avec des décalages temporels de telle manière que les signaux ultrasonores élémentaires arrivent en phase au point d'intérêt.

De telles sondes ultrasonores sont connues de WO2005/050617, US 2013/047729 A1 et FR2930642.

Dans le cas d'un objet comprenant une surface non plane ou rugueuse, il est nécessaire de corriger les lois de retard en fonction du profil de la surface. Pour ce faire, il est possible de munir la sonde à ultrasons d'un profilomètre propre à déterminer le profil de la surface pour corriger les lois de retards en fonction du profil déterminé, comme dans WO2005/050617.

Un des buts de l'invention est de proposer une sonde à ultrasons qui soit simple et facile à mettre en oeuvre.

A cet effet, l'invention propose une sonde à ultrasons pour l'examen d'un objet par ultrasons, la sonde comprenant une pluralité d'éléments émetteurs propres à émettre des ultrasons pour émettre un faisceau ultrasonore focalisé dans l'objet au travers d'une zone active d'une surface de l'objet, un dispositif de profilométrie pour déterminer le profil de ladite surface de l'objet et commander l'émission du faisceau ultrasonore en fonction du profil déterminé, dans laquelle le dispositif de profilométrie comprend un appareil de prise d'image pour prendre au moins une image numérique de la zone active et un module de traitement d'image propre à déterminer le profil de la zone active par analyse du flou optique de la ou au moins une image.

Selon des modes de réalisation particuliers, la sonde à ultrasons comprend une ou plusieurs des caractéristiques suivantes, prises isolément ou selon toute les combinaisons techniquement possibles :
- le dispositif de profilométrie est propre à prendre plusieurs images de la zone active en déplaçant un plan focal de l'appareil de prise d'image par rapport à la zone active entre les prises d'image ;
- l'appareil de prise d'image est monté mobile sur un corps de la sonde à ultrasons de façon à pouvoir déplacer le plan focal de l'appareil de prise d'image par rapport à la zone active entre les prises d'image ;
- l'appareil de prise d'image possède un objectif optique qui est réglable de façon à pouvoir déplacer le plan focal de l'appareil de prise d'image par rapport à la zone active entre les prises d'image ;
- l'appareil de prise d'image est disposé de telle manière à prendre des images de la zone active au travers d'une surface émettrice sur laquelle sont répartis les éléments émetteurs, lorsque la sonde à ultrasons est appliquée contre l'objet à examiner ;
- la sonde à ultrasons est configurée de telle manière qu'une surface émettrice de la sonde sur laquelle sont répartis les éléments émetteurs est hors du champ visuel de l'appareil de prise d'image, lorsque la sonde est appliquée contre l'objet à examiner ;
- la sonde à ultrasons est configurée de telle manière que l'appareil de prise d'image prend des images de la zone active avec un angle non nul entre l'axe optique de l'appareil de prise d'image et la normale à la zone active, lorsque la sonde est appliquée contre l'objet à examiner ;
- l'appareil de prise d'image est disposé pour prendre des images d'une zone amont de la surface de l'objet située en amont de la zone active lors du déplacement de la sonde le long de la surface de l'objet.

L'invention concerne également un procédé d'examen non destructif d'un objet possédant une surface, le procédé comprenant :
- la détermination d'un profil d'une zone active de la surface par prise d'au moins une image numérique de la zone active et analyse du flou optique de la ou au moins une image à l'aide d'un dispositif de profilométrie ;
- l'émission d'un faisceau ultrasonore focalisé dans l'objet à travers la zone active à l'aide d'une pluralité d'éléments émetteurs d'ultrasons, chaque élément émetteur d'ultrasons étant commandé en fonction du profil déterminé ;

Dans un mode de mise en oeuvre, on prend plusieurs images de la zone active à l'aide d'un appareil de prise d'image du dispositif de profilométrie en modifiant la position relative de la zone active et du plan focal de l'appareil de prise d'image entre chaque prise d'image.

L'invention et ses avantages seront mieux compris à la lecture de la description qui va suivre, donnée uniquement à titre d'exemple et faite en référence aux dessins annexés, sur lesquels :
- la Figure 1 est une vue schématique d'une sonde à ultrasons pour examiner une pièce ; et
- la Figure 2 est une vue schématique d'une sonde à ultrasons selon une variante ; et
- la Figure 3 est un diagramme illustrant des étapes d'un procédé d'examen ultrasonore d'une pièce.

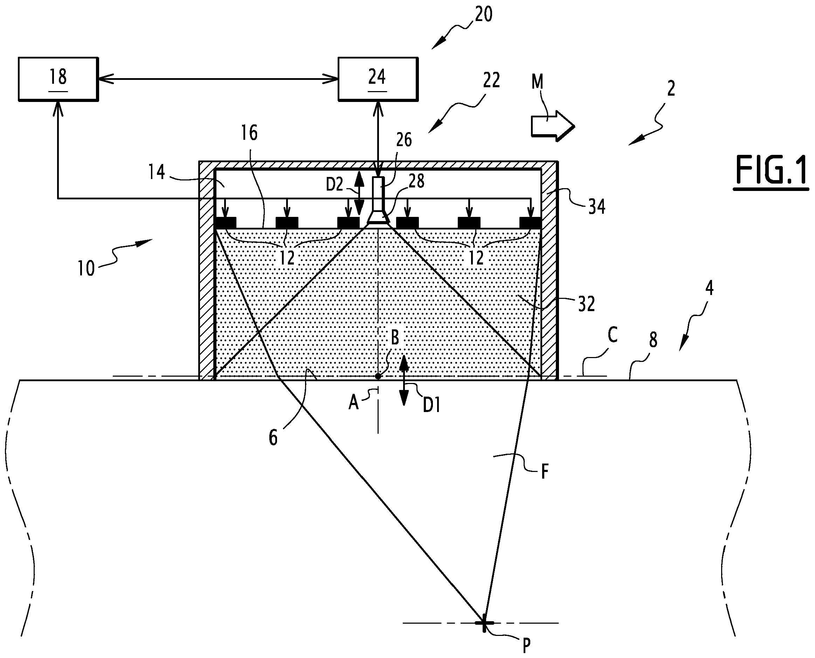

La sonde à ultrasons 2 de la Figure 1 permet de procéder à un examen d'un objet 4 par émission d'un faisceau ultrasonore focalisé F à l'intérieur de l'objet 4 au travers d'une zone 6 d'une surface 8 de l'objet 4, et réception et analyse des signaux sonores réfléchis par l'objet 4 en réponse à l'émission du faisceau ultrasonore focalisé F.

La zone 6 de la surface 8 de l'objet 4 à travers laquelle le faisceau ultrasonore focalisé F est envoyé à l'intérieur de l'objet 4 est nommée ci-après « zone active 6 ».

La sonde à ultrasons 2 comprend un dispositif émetteur-récepteur 10 propre à émettre un faisceau ultrasonore focalisé F et à recevoir un signal sonore réfléchis par l'objet.

Le dispositif émetteur-récepteur 10 comprend de multiples éléments émetteurs 12 propres à émettre chacun un signal ultrasonore élémentaire. Les signaux ultrasonores forment ensemble le faisceau ultrasonore focalisé F.

Les éléments émetteurs 12, ou au moins une partie d'entre eux, sont également propres à recevoir les signaux sonores réfléchis. Il s'agit d'éléments émetteurs-récepteurs.

En option ou en variante, le dispositif émetteur-récepteur 10 comprend des éléments récepteurs propres à recevoir les signaux réfléchis qui sont distincts des éléments émetteurs 12.

Le dispositif émetteur-récepteur 10 comprend un support d'éléments 14 présentant une surface émettrice 16 sur laquelle sont répartis les éléments émetteurs 12. Dans le cas d'éléments récepteurs distincts des éléments émetteurs 12, ces éléments récepteurs sont également répartis sur la surface émettrice.

Le faisceau ultrasonore est dit « focalisé » lorsqu'il est dirigé vers un point d'intérêt P de l'objet de manière à concentrer l'énergie acoustique vers ce point d'intérêt P.

Le signal ultrasonore émis par chaque élément émetteur 12 possède un temps de parcours entre l'élément émetteur 12 et le point d'intérêt P visé.

Pour former un faisceau ultrasonore focalisé F vers un point d'intérêt P, les signaux élémentaires ultrasonores sont émis avec des décalages temporels de telle manière qu'ils atteignent le point d'intérêt en phase.

La sonde à ultrasons 2 comprend un module électronique de traitement 18 propre à commander le dispositif émetteur-récepteur 4 pour l'émission d'un faisceau ultrasonore focalisé F.

Le module de traitement 18 est programmé pour déterminer une loi de retard respective pour chaque élément émetteur 12, et pour commander l'émission des signaux ultrasonores par les éléments émetteurs 12 en fonction de leurs lois de retard respectives.

Chaque loi de retard détermine un décalage temporel d'émission d'un signal ultrasonore élémentaire par l'élément émetteur associé par rapport à un signal de référence.

Le module de traitement 18 exécute un algorithme de calcul de lois de retards qui détermine pour chaque élément émetteur 12 une loi de retard respective en fonction notamment de la position du point d'intérêt P par rapport à la sonde à ultrasons 2.

Les lois de retard à appliquer dépendent du relief ou profil de la zone active 6 de la surface 8 de l'objet 4.

La sonde à ultrasons 2 comprend un dispositif électronique de profilométrie 20 pour déterminer le profil de la zone active 6 située en regard de la surface émettrice 16.

Le dispositif de profilométrie 20 est propre à prendre au moins une image numérique de la zone active et à déterminer le profil de la zone active 6 par analyse du flou optique sur la ou au moins une image numérique de la zone active 6.

Le dispositif de profilométrie 20 comprend un appareil de prise d'image 22 pour prendre au moins une image numérique de la zone active 6 et un module électronique de d'analyse 24 propre à déterminer le profil de la zone active 6 par analyse du flou optique de la ou au moins image prise.

L'appareil de prise d'image 22 est un appareil photo numérique ou une caméra numérique. Il comprend classiquement un capteur optique 26 photosensible matriciel, par exemple un capteur CCD ou CMOS.

L'appareil de prise d'image 22 comprend un objectif optique 28. Le capteur optique 26 est disposé pour prendre des images au travers de l'objectif optique 28. L'objectif optique 28 comprend classiquement une ou plusieurs lentilles optiques.

L'appareil de prise d'image 22 possède un champ visuel qui est la portion de l'espace visible sur une image prise par l'appareil optique. L'objectif optique 28 est le premier élément de l'appareil de prise d'image 22 recevant la lumière provenant du champ visuel de l'appareil de prise d'image 22

Lorsque la sonde à ultrasons 2 est appliquée contre la surface 8 de l'objet 4, l'appareil de prise d'image 22 prend une image de la zone 6 de la surface 8 de l'objet 4 située dans le champ visuel.

L'objectif optique 28 présente un axe optique A, un point focal B à distance de l'objectif optique 28 le long de l'axe optique, et un plan focal C perpendiculaire à l'axe optique A et passant par le point focal B.

Un élément se trouvant dans le plan focal C apparaîtra net sur une image prise par l'appareil de prise d'image 22. Des éléments de se trouvant devant ou derrière le plan focal C apparaîtront flous sur une image prise par l'appareil de prise d'image 22. Plus un élément est éloigné du plan focal C, plus il apparaîtra flou sur l'image.

Le plan focal C est proche de la surface 8 lorsque la sonde à ultrasons 2 est appliquée contre la surface 8.

Le module d'analyse 24 est propre à traiter au moins une image de la zone active 6 par analyse du flou optique sur la ou au moins une image de manière à déterminer le profil de la zone active.

Le module d'analyse 24 est programmé pour exécuter un algorithme d'analyse du flou optique. L'algorithme d'analyse du flou optique est basé par exemple de manière connue sur l'analyse du contraste dans l'image. En effet, une image numérique est formée d'une matrice de pixels. Plus une région de l'image numérique est floue sur une image numérique, plus le contraste entre les pixels voisins de cette région est faible, et, plus une région de l'image numérique est nette, plus le contraste entre les pixels voisins de cette région est fort. L'analyse des gradients de contraste ou une analyse équivalente sur l'image numérique d'une surface permet donc de déterminer le profil de la surface.

Pour améliorer la précision, il est possible de prendre plusieurs images numériques de la zone active 6 en faisant varier la position du plan focal C par rapport à la zone active 6 entre les prises d'images, puis de comparer les images entre elles et en fonction de la variation de la position du plan focal C.

Pour ce faire, dans un mode de réalisation, l'objectif optique 28 est un objectif optique réglable de manière déplacer le plan focal C le long de l'axe optique A (Flèche D1).

De préférence, l'objectif optique 28 est motorisé et comprend un moteur propre à modifier le réglage, par exemple par déplacement d'une ou plusieurs lentilles de l'objectif optique 28.

En variante ou en option, l'appareil de prise d'image 22 dans son ensemble (capteur optique 26 et objectif optique 28) est déplaçable (Flèche D2), par exemple à l'aide d'un moteur de déplacement, de manière à modifier la distance, prise suivant l'axe optique A, entre l'appareil de prise d'image 22 et la zone active 6 et à déplacer plan focal C relativement à la zone active 6.

En variante ou en option, la surface émettrice 16, les éléments émetteurs 12 et l'appareil de prise d'image 22 sont déplaçables conjointement, par exemple à l'aide d'un moteur de déplacement, de manière à modifier la distance, prise suivant l'axe optique A, entre l'appareil de prise d'image 22 et la zone active 6.

Le module de traitement 18 est propre à traiter les signaux réfléchis reçus par le dispositif émetteur-récepteur 4. Le module de traitement 18 est configuré pour déterminer la position, la forme et les dimensions d'éventuels défauts à l'intérieur de l'objet 4 examiné. En variante, le module de traitement 18 est configuré pour transmettre les signaux reçus vers une unité électronique de traitement distante.

La sonde à ultrasons 2 comprend un dispositif de couplage sonore 32 configuré pour être interposé entre le dispositif émetteur-récepteur 10 et la zone active 6, de telle manière que les signaux ultrasonores sont émis dans le dispositif de couplage 32 et transmis par celui-ci à la zone active 6.

Le dispositif de couplage sonore 32 est prévu pour assurer une continuité de matière entre la surface émettrice 16 et la zone active 6 pour une meilleure transmission des ondes sonores.

Le dispositif de couplage sonore 32 est prévu pour être en contact avec la surface émettrice et pour être appliqué en contact contre la zone active 6.

Le dispositif de couplage sonore 32 est par exemple un sabot rigide en matière plastique. En variante, le dispositif de couplage est un coussin déformable rempli d'un fluide, par exemple de l'eau, présentant une surface d'appui destinée à être appliquée contre la surface de la pièce et propre à se conformer à la surface de l'objet. Ceci permet un couplage sonore amélioré par rapport à un sabot rigide.

L'appareil de prise d'image 22 prend des images de la zone active 6 au travers du dispositif de couplage sonore 32. A cet effet, ce dernier est transparent.

La sonde à ultrasons 2 comprend un corps de sonde 34 déplaçable le long de la surface 8 de l'objet 4. Le support d'éléments 14 est fixé sur le corps de sonde 34 de façon que la surface émettrice 16 est en regard de la zone active 6. Le dispositif de couplage sonore 32 est fixé sur le corps de sonde 34 de manière à être interposé entre la surface émettrice 16 et la zone active 6. L'appareil de prise d'image 22 est fixé sur le corps de sonde 34.

Dans le cas où l'appareil de prise d'image 22 est déplaçable pour régler la position du plan focal, l'appareil de prise d'image 22 est monté coulissant sur le corps de sonde 34 de manière à coulisser suivant l'axe optique A (Flèche D2 sur la Figure 1).

Comme illustré sur la Figure 1, l'appareil de prise d'image 22 est disposé de telle manière à prendre une image de la zone active 6 au travers de la surface émettrice 16, entre des éléments émetteurs 12 du dispositif émetteur-récepteur 4.

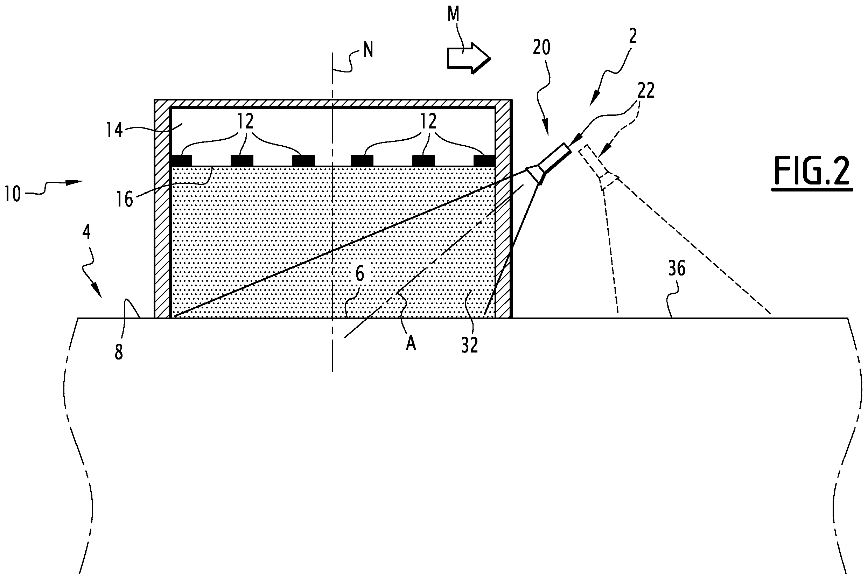

En variante, comme illustré sur la Figure 2, l'appareil de prise d'image 22 est disposé de manière qu'il est décalé par rapport à la surface émettrice 16 et que la surface émettrice 16 se situe hors du champ visuel de l'appareil de prise d'image 22.

L'appareil de prise d'image 22 est ici incliné de telle sorte que son axe optique A fait un angle non nul avec la normal N à la zone active 6. Le module de traitement d'image comprend un module de correction d'image connu en soi permettant de tenir compte de cette inclinaison.

Dans une autre variante illustré en pointillés sur la Figure 2, l'appareil de prise d'image est fixé sur le corps de sonde de manière à prendre une image d'une zone aval 36 de la surface de la pièce décalée par rapport à la zone active 6 et située en avant de la zone active 6 sur la trajectoire de la sonde à ultrasons 2 le long de la surface 8 de l'objet 4, en considérant la direction de déplacement de la sonde le long de la surface 8 (Flèche M). Cette disposition permet de connaître le profil d'une zone en avance pour appliquer ensuite les lois de retards déterminées lorsque cette zone devient la zone active.

En fonctionnement, la sonde à ultrasons 2 est appliquée contre la zone active 6 de la surface 8 de l'objet 4 à examiner.

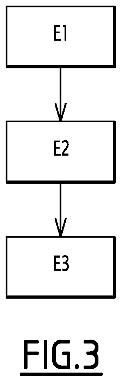

Comme illustré sur la Figure 3, dans une première étape E1, le dispositif de profilométrie 20 détermine le profil de la zone active de la pièce. Pour ce faire, l'appareil de prise d'image 22 prend au moins une image numérique de la zone active 6. Le module d'analyse 24 détermine le profil de la zone active 6 par analyse du flou optique de la ou au moins une image numérique de la zone active 6 et transmet le profil déterminé au module de traitement 18.

Dans une deuxième étape E2, le module de traitement 18 détermine des lois de retards pour les éléments émetteurs 12 du dispositif émetteur-récepteur 10. Le module de commande 18 envoie des instructions de commande aux éléments émetteurs 6, les instructions tenant compte des lois de retards pour l'émission d'un faisceau ultrasonore focalisé vers un point d'intérêt de l'objet examiné. Le dispositif émetteur-récepteur 4 émet le faisceau ultrasonore focalisé F et reçoit les signaux sonores réfléchis par l'objet en réponse au faisceau ultrasonore focalisé F.

Dans une troisième étape E3, le module de traitement 18 traite les signaux sonores réfléchis reçus pour permettre de déterminer la position, la forme et les dimensions d'éventuels défauts à l'intérieur de l'objet examiné.

Ces étapes sont répétées en manière cyclique en déplaçant la sonde à ultrasons le long de la surface 8 (Flèche M sur les Figures 1 et 2) pour examiner l'objet 4 en profondeur sous une étendue de la surface 8.

Le dispositif de profilométrie par analyse du flou optique est simple et robuste. Il possède un nombre limité de pièces mécaniques en mouvement. Ceci limite la maintenance et la réparation. Ceci limite également le risque de perte de pièces, en particulier dans un circuit de réacteur nucléaire, dans lequel de très petit débris peuvent causer des dommages importants lorsqu'ils sont entraînés à grande vitesse au travers des assemblages de combustible nucléaire. Le dispositif de profilométrie par flou optique permet de déterminer le profil d'une surface avec une bonne résolution, ce qui permet un examen par ultrasons plus précis et plus fiable. Il est possible d'obtenir une résolution de l'ordre du dixième de millimètre.

La sonde à ultrasons est utilisable en particulier pour l'examen de parois des composants d'un réacteur nucléaire, par exemple non limitatif, pour l'examen sous eau de la paroi de la cuve du réacteur nucléaire. Pour un tel examen, la sonde est disposée à l'extrémité d'une perche de manoeuvre qui est manoeuvrée par un opérateur pour déplacer la sonde à ultrasons le long de la paroi.

## Revendications

1. Sonde à ultrasons pour l'examen d'un objet par ultrasons, la sonde comprenant une pluralité d'éléments émetteurs (12) propres à émettre des ultrasons pour émettre un faisceau ultrasonore focalisé (F) dans l'objet au travers d'une zone active (6) d'une surface (8) de l'objet (4), un dispositif de profilométrie (20) pour déterminer le profil de ladite surface de l'objet et commander l'émission du faisceau ultrasonore en fonction du profil déterminé, **caractérisée en ce que** le dispositif de profilométrie (20) comprend un appareil de prise d'image (22) pour prendre au moins une image numérique de la zone active et un module de traitement d'image (24) propre à déterminer le profil de la zone active (6) par analyse du flou optique de la ou au moins une image.

2. Sonde à ultrasons selon la revendication 1, dans laquelle le dispositif de profilométrie (20) est propre à prendre plusieurs images de la zone active en déplaçant un plan focal (C) de l'appareil de prise d'image par rapport à la zone active entre les prises d'image.

3. Sonde à ultrasons selon la revendication 2, dans laquelle l'appareil de prise d'image est monté mobile sur un corps (34) de la sonde à ultrasons (2) de façon à pouvoir déplacer le plan focal (C) de l'appareil de prise d'image (22) par rapport à la zone active (6) entre les prises d'image.

4. Sonde à ultrasons selon la revendication 2 ou 3, dans laquelle l'appareil de prise d'image (22) possède un objectif optique (28) qui est réglable de façon à pouvoir déplacer le plan focal (C) de l'appareil de prise d'image (22) par rapport à la zone active entre les prises d'image.

5. Sonde à ultrasons selon l'une quelconque des revendications précédentes, dans laquelle l'appareil de prise d'image (22) est disposé de telle manière à prendre des images de la zone active (6) au travers d'une surface émettrice (16) sur laquelle sont répartis les éléments émetteurs (12), lorsque la sonde à ultrasons est appliquée contre l'objet à examiner.

6. Sonde à ultrasons selon l'une quelconque des revendications 1 à 4, configurée de telle manière qu'une surface émettrice (16) de la sonde sur laquelle sont répartis les éléments émetteurs (12) est hors du champ visuel de l'appareil de prise d'image, lorsque la sonde est appliquée contre l'objet à examiner.

7. Sonde à ultrasons selon la revendication 6, configurée de telle manière que l'appareil de prise d'image (22) prend des images de la zone active (6) avec un angle non nul entre l'axe optique (A) de l'appareil de prise d'image (22) et la normale (N) à la zone active (6), lorsque la sonde est appliquée contre l'objet à examiner.

8. Sonde à ultrasons selon l'une quelconque des revendications précédentes, dans laquelle l'appareil de prise d'image est disposé pour prendre des images d'une zone amont de la surface de l'objet située en amont de la zone active lors du déplacement de la sonde le long de la surface de l'objet.

9. Procédé d'examen non destructif d'un objet (4) possédant une surface, le procédé comprenant :
- la détermination d'un profil d'une zone active (6) de la surface par prise d'au moins une image numérique de la zone active et analyse du flou optique de la ou au moins une image à l'aide d'un dispositif de profilométrie (20);
- l'émission d'un faisceau ultrasonore focalisé (F) dans l'objet à travers la zone active (6) à l'aide d'une pluralité d'éléments émetteurs (12) d'ultrasons, chaque élément émetteur d'ultrasons (12) étant commandé en fonction du profil déterminé.

10. Procédé selon la revendication 9, dans lequel on prend plusieurs images de la zone active à l'aide d'un appareil de prise d'image du dispositif de profilométrie en modifiant la position relative de la zone active et du plan focal de l'appareil de prise d'image entre chaque prise d'image.

## Patentansprüche

1. Ultraschall-Sonde zur Untersuchung eines Objekts mittels Ultraschalls, wobei die Sonde aufweist eine Mehrzahl an Sender-Elementen (12), die imstande sind, Ultraschall zu senden, um einen fokussierten Ultraschall-Strahl (F) in das Objekt durch eine aktive Zone (6) einer Fläche (8) des Objekts (4) hindurch zu senden, eine Profilometrie-Vorrichtung (20) zum Ermitteln des Profils des besagten Fläche des Objekts und zum Steuern des Sendens des Ultraschall-Strahls abhängig von dem ermittelten Profil, **dadurch gekennzeichnet, dass** die Profilometrie-Vorrichtung (20) aufweist eine Bildaufnahme-Vorrichtung (22) zum Aufnehmen von mindestens einem digitalen Bild der aktiven Zone und ein Bildverarbeitungs-Modul (24), welches imstande ist, das Profil der aktiven Zone (6) mittels Analyse der optischen Unschärfe von dem oder mindestens einem Bild zu ermitteln.

2. Ultraschall-Sonde gemäß Anspruch 1, wobei die Profilometrie-Vorrichtung (20) imstande ist, mehrere Bilder der aktiven Zone aufzunehmen während des Verschiebens einer Brennebene (C) der Bildaufnahme-Vorrichtung bezüglich der aktiven Zone zwischen den Bildaufnahmen.

3. Ultraschall-Sonde gemäß Anspruch 2, wobei die Bildaufnahme-Vorrichtung bewegbar an einem Körper (34) der Ultraschall-Sonde (2) montiert ist, sodass die Brennebene (C) der Bildaufnahme-Vorrichtung (22) bezüglich der aktiven Zone (6) zwischen den Bildaufnahmen verschoben werden kann.

4. Ultraschall-Sonde gemäß Anspruch 2 oder 3, wobei die Bildaufnahme-Vorrichtung (22) ein Optikobjektiv (28) hat, welches steuerbar ist, sodass die Brennebene (C) der Bildaufnahme-Vorrichtung (22) bezüglich der aktiven Zone zwischen den Bildaufnahmen verschoben werden kann.

5. Ultraschall-Sonde gemäß irgendeinem der vorherigen Ansprüche, wobei die Bildaufnahme-Vorrichtung (22) in einer Weise angeordnet ist, um Bilder der aktiven Zone (6) durch eine Sendefläche (16) hindurch, an welcher die Sender-Elemente (12) verteilt sind, aufzunehmen, wenn die Ultraschall-Sonde an das Untersuchungs-Objekt angelegt ist.

6. Ultraschall-Sonde gemäß irgendeinem der Ansprüche 1 bis 4, die auf eine Weise eingerichtet ist, dass eine Sendefläche (16) der Sonde, an welcher die Sender-Elemente (12) verteilt sind, außerhalb des Bildfeldes der Bildaufnahme-Vorrichtung ist, wenn die Sonde an das Untersuchungs-Objekt angelegt ist.

7. Ultraschall-Sonde gemäß Anspruch 6, die auf eine Weise eingerichtet ist, dass die Bildaufnahme-Vorrichtung (22) Bilder der aktiven Zone (6) mit einem Winkel, der nicht Null ist, zwischen der optischen Achse (A) der Bildaufnahme-Vorrichtung (22) und der Normalen (N) zu der aktiven Zone (6) aufnimmt, wenn die Sonde an das Untersuchungs-Objekt angelegt ist.

8. Ultraschall-Sonde gemäß irgendeinem der vorherigen Ansprüche, wobei die Bildaufnahme-Vorrichtung angeordnet ist, um Bilder einer Zone aufzunehmen, die der Fläche des Objekts vorgelagert ist, welche sich vorgelagert zu der aktiven Zone befindet, während des Verschiebens der Sonde entlang der Fläche des Objekts.

9. Verfahren zur zerstörungsfreien Untersuchung eines Objekts (4), welches eine Fläche hat, wobei das Verfahren aufweist:
- das Ermitteln eines Profils einer aktiven Zone (6) der Fläche mittels Aufnehmens von mindestens einem digitalen Bild der aktiven Zone und Analyse der optischen Unschärfe von dem oder mindestens einem Bild mit Hilfe einer Profilometrie-Vorrichtung (20),
- das Senden eines fokussierten Ultraschall-Strahls (F) in das Objekt durch die aktive Zone (6) hindurch mit Hilfe von einer Mehrzahl an Sender-Elementen (12) von Ultraschall, wobei jedes Ultraschall-Sender-Element (12) abhängig von dem ermittelten Profil gesteuert wird.

10. Verfahren gemäß Anspruch 9, wobei man mehrere Bilder der aktiven Zone aufnimmt mit Hilfe einer Bildaufnahme-Vorrichtung der Profilometrie-Vorrichtung mittels des Veränderns der relativen Position der aktiven Zone und der Brennebene der Bildaufnahme-Vorrichtung zwischen jeder Bildaufnahme.

## Claims

1. An ultrasonic probe for examining an object with ultrasound, the probe comprising a plurality of emitter elements (12) able to emit ultrasonic waves for emitting a focused ultrasonic beam (F) into the object through an active area (6) of a surface (8) of the object (4), a profilometry device (20) for determining the profile of said surface of the object and for controlling the emission of the ultrasonic beam depending on the determined profile, **characterized in that** the profilometry device (20) comprises an image-taking apparatus (22) for taking at least one digital image of the active area and an image processing module (24) able to determine the profile of the active area (6) by analyzing the optical blurring of said or at least one image.

2. The ultrasonic probe according to claim 1, wherein the profilometry device (20) is able to take several images of the active area by moving a focal plane (C) of the image-taking apparatus relatively to the active area between the taking of images.

3. The ultrasonic probe according to claim 2, wherein the image-taking apparatus is movably mounted on a body (34) of the ultrasonic probe (2) so as to be able to move the focal plane (C) of the image-taking apparatus (22) relatively to the active area (6) between the taking of images.

4. The ultrasonic probe according to claim 2 or 3, wherein the image-taking apparatus (22) has an optical objective (28) which is adjustable so as to be able to move the focal plane (C) of the image-taking apparatus (22) relatively to the active area between the taking of images.

5. The ultrasonic probe according to any of the preceding claims, wherein the image-taking apparatus (22) is positioned so as to take images of the active area (6) through an emitting surface (16) on which are distributed the emitter elements (12), when the ultrasonic probe is applied against the object to be examined.

6. The ultrasonic probe according to any of claims 1 to 4, configured so that one emitting surface (16) of the probe on which are distributed the emitter elements (12) is outside the field of vision of the image-taking apparatus, when the probe is applied against the object to be examined.

7. The ultrasonic probe according to claim 6, configured so that the image-taking apparatus (22) takes images of the active area (6) with a non-zero angle between the optical axis (A) of the image-taking apparatus (22) and the normal (N) to the active area (6), when the probe is applied against the object to be examined.

8. The ultrasonic probe according to any of the preceding claims, wherein the image-taking apparatus is positioned so as to take images of an upstream area of the surface of the object located upstream from the active area during the displacement of the probe along the surface of the object.

9. A method for non-destructive examination of an object (4) having a surface, the method comprising:
- the determination of a profile of an active area (6) of the surface by taking at least one digital image of the active area and by analyzing the optical blurring of said or at least one image by means of a profilometry device (20);
- the emission of a focused ultrasonic beam (F) into the object through the active area (6) by means of a plurality of ultrasonic wave emitter elements (12), each ultrasonic wave emitter element (12) being controlled depending on the determined profile.

10. The method according to claim 9, wherein several images of the active area are taken by means of an image-taking apparatus of the profilometry device by modifying the relative position of the active area and of the focal plane of the image-taking apparatus between each taking of an image.
